# EUROPEAN PATENT SPECIFICATION

(11) **EP 0 806 520 B1**
(45) Date of publication and mention of the grant of the patent: **13.11.2002**
(21) Application number: 97303190.9
(22) Date of filing: 09.05.1997
(51) Int. Cl.: D21F 11/00, D21H 27/40, B32B 29/00, B31F 1/07, B31F 1/14, D21H 11/00

(54) **Method of making an ultra soft, high basis weight tissue**
Verfahren zur Herstellung eines ultraweichen Tissuepapiers mit hohem Grundgewicht
Procédé de fabrication de papier tissu ultradoux avec poids de base élevé

(30) Priority: 09.05.1996 US 647110
(43) Date of publication of application: 12.11.1997
(73) Proprietor: Fort James Corporation, Atlanta, Georgia 30303 (US)
(72) Inventor: Leege, Joseph C., Neenah, Wisconsin 54956 (US); Ramesh, Ranga, Appleton, Wisconsin 54915 (US)
(74) Representative: Everitt, Christopher James Wilders

(56) References cited:
- EP-A- 0 404 189
- EP-A- 0 481 745
- EP-A- 0 495 637
- EP-A- 0 496 524
- EP-A- 0 675 225
- EP-A- 0 707 945
- EP-A- 0 743 172
- US-A- 5 262 007
- US-A- 5 320 710
- US-A- 5 354 425
- US-A- 5 399 241

## Description

### FIELD OF THE INVENTION

The present invention relates to a method of making an ultra soft, multi-ply tissue having a high basis weight using wet press technology.

### BACKGROUND OF THE INVENTION

In the area of bathroom tissue, softness, absorbency and strength are key attributes considered by consumers. It is highly desirable that the tissue product have a consumer perceived feel of softness. This softness plays a key role in consumer preference. Softness relates both to the product bulk and surface characteristics. In addition to softness, the consumer desires a product that is both strong and absorbent to minimize the amount of the product which must be used to do an effective job.

The method of the present invention uses wet press technology to prepare a strong, ultra soft tissue having a high basis weight. The tissue produced by the method of the present invention exhibits good strength and absorbency while remaining extremely soft. Properties such as those exhibited by the tissue produced by the present invention have previously only been seen on products produced by costly Through-Air-Drying (TAD) technology. The tissue produced by the method of the present invention has properties like those of the TAD produced tissue but can be formed using more efficient, less expensive wet press technology

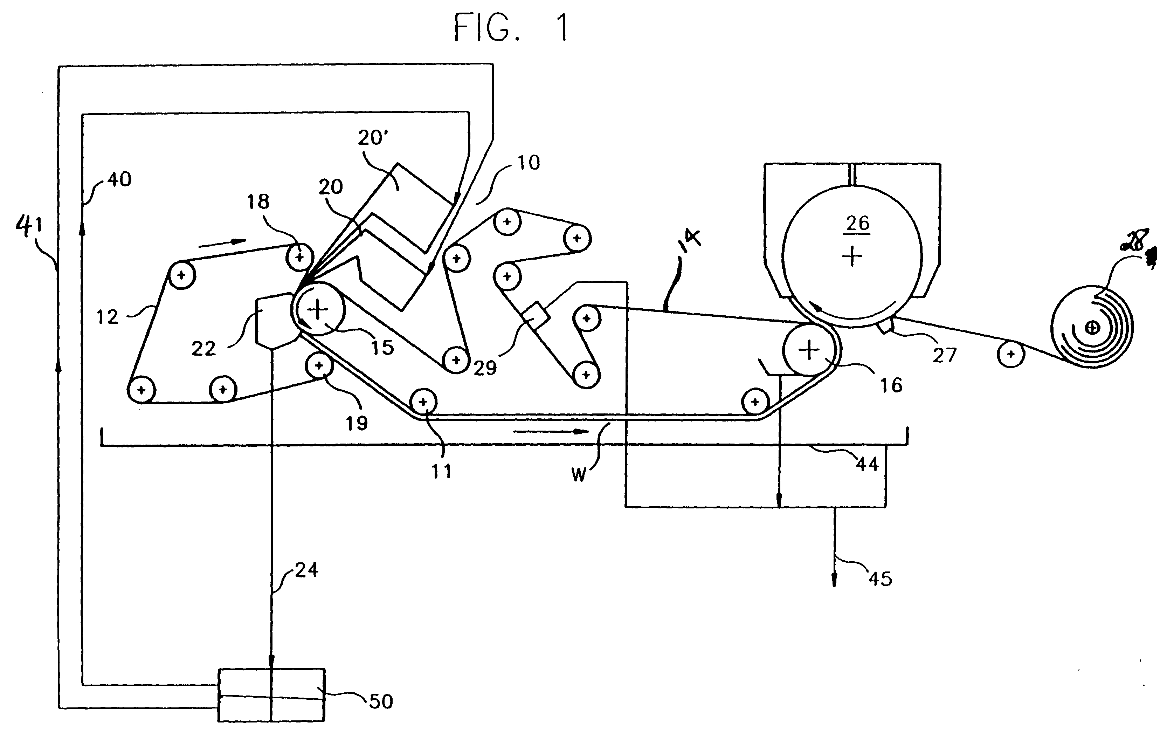

In a conventional wet press process and apparatus (10), as exemplified in Figure 1, a furnish is fed from silo (50) through conduits (40, 41) to headbox chambers (20, 20'). A web (W) is formed on a conventional wire former (12), supported by rolls (18, 19), from a liquid slurry of pulp, water and other chemicals. Materials removed from the web of fabric by Uhle box (29) and through the forming fabric when pressed against forming roll (15) are returned to silo (50), from saveall (22) through conduit (24). The web is then transferred to a moving felt or fabric (14), supported by roll (11) for drying and pressing. Materials removed from the web during drying and pressing are collected in saveall (44) and fed to white water conduit (45). The web is then pressed by suction press roll (16) against the surface of a rotating Yankee dryer cylinder (26) which is heated to cause the paper to substantially dry on the cylinder surface. The moisture within the web as it is laid on the Yankee surface causes the web to transfer to the surface. Liquid adhesive may be applied to the surface of the dryer to provide substantial adherence of the web to the creping surface. The web is then creped from the surface with a creping blade (27). The creped web is then usually passed between calender rollers (not shown) and rolled up on roll (28) prior to further converting operations, for example, embossing. The action of the creping blade on the paper is known to cause a portion of the interfiber bonds within the paper to be broken up by the mechanical smashing action of the blade against the web as it is being driven into the blade. However, fairly strong interfiber bonds are formed between the wood pulp fibers during the drying of the moisture from the web. The strength of these bonds in prior art tissues is such that, even after creping, the web retains a perceived feeling of hardness, a fairly high density, and low-bulk and water absorbency.

To reduce the strength of the interfiber bonds that inevitably result when wet pressing and drying a web from a slurry, various processes have been utilized. One such process is the passing of heated air through the wet fibrous web after it is formed on a wire and transferred to a permeable carrier--a so-called through-air-dried (TAD) process--so that the web is not compacted prior to being dried. The lack of compaction, such as would occur when the web is pressed while on a felt or fabric and against the drying cylinder when it is transferred thereto, reduces the opportunity for interfiber bonding to occur, and allows the finished product to have greater bulk than can be achieved in a wet press process. Because of the consumer perceived softness of these products, and their greater ability to absorb liquids than webs formed in wet press processes, the products formed by the newer processes enjoy an advantage in consumer acceptance.

Felted wet press processes are significantly more energy efficient than processes such as through-air-drying since they do not require heating and moving large quantities of air as required by the TAD process. In wet press operations, excess moisture is mechanically pressed from the web and the final drying of the web is obtained chiefly on the heated Yankee drying cylinder which is maintained at the proper drying temperature.

EP-A-0495 637 discloses a foam forming process in which a high strength, high softness tissue is produced by forming a web from a foamed fiber furnish. EP-A-0 481 745 discloses a foam forming process in which the foam is formed by directing a high pressure jet of foamable liquid onto a forming web and generating the foam in situ on the forming web.

The present invention provides a method for making a tissue product that achieves high bulk, absorbency and softness above existing conventional wet press technology tissue, approaching or achieving the levels found using through-air-drying while using the cheaper and more efficient wet press process, and without requiring the use of a foam forming process.

### SUMMARY OF THE INVENTION

Further advantages of the invention will be set forth in part in the description which follows and in part will be apparent from the description.

To achieve the foregoing advantages and in accordance with the purpose of the invention, as embodied and broadly described herein, there are provided methods as set forth in the claims hereinafter.

### BRIEF DESCRIPTION OF THE DRAWING

Figure 1 is a schematic representation of preferred wet press processing apparatus.
Figure 2 illustrates a preferred emboss pattern for use in the present invention.
Figure 3 illustrates the relationship between GM Tensile Stiffness and GM MMD Friction.

### DETAILED DESCRIPTION

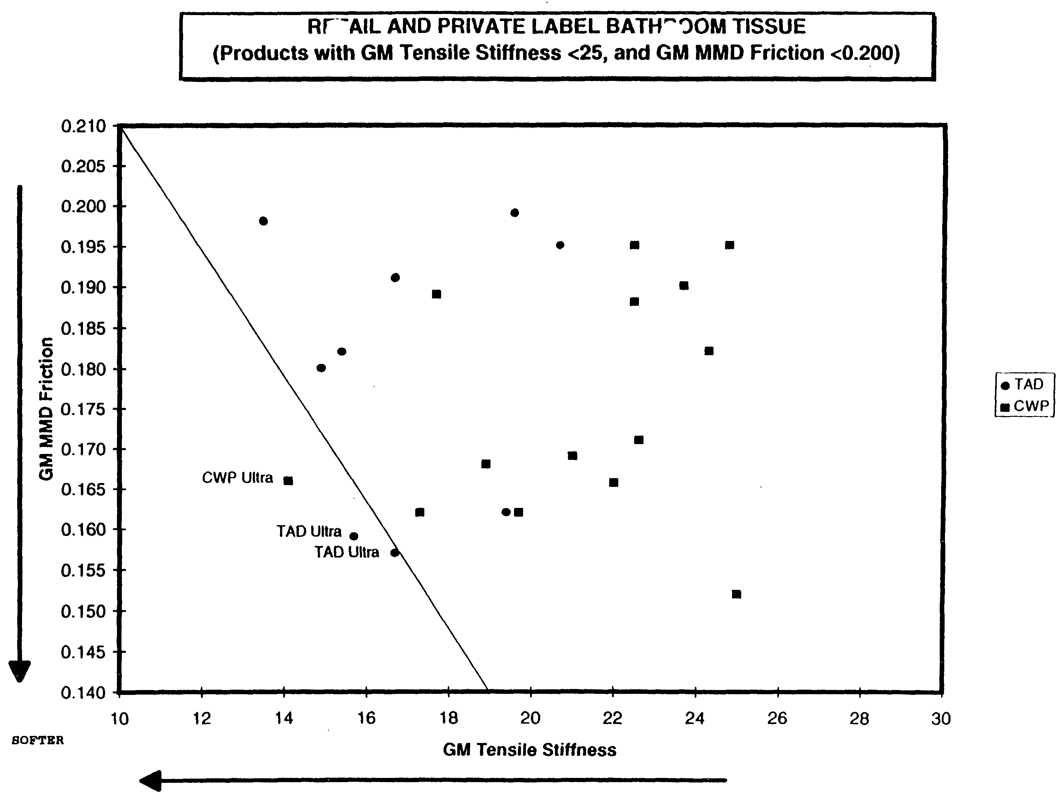

The present invention relates to the production of an ultra-soft, high basis weight multi-ply tissue. As used herein, high basis weight refers to a product (one or more plies) having a basis weight of 22 or more lbs per 3000 sq.ft. (10 kg or more per 280 sq.metre) ream. As used herein ultra-soft refers to a product below the line ranging from (GM Tensile Stiffness) GMTS=19 and GM MMD=0.140 and GMTS=10 and GMM MD=0.210. Above this line a product would be labelled soft but not ultra soft. The relationship between GMTS and GM MMD and the afore-mentioned line are set forth in Figure 3.

The pulp used to produce the web of the present invention comprises between 35% and 90% of a first fiber and between 65% and 10% of a second fiber. The first fiber is characterized as a short fiber with an average fiber length of 2.0 mm or less and a coarseness of less than about 12 mg/100 metres. The second fiber is characterized as a long fiber with an average fiber length of more than 2.0 mm and a coarseness of less than about 35 mg/100 metres. The second fibers preferably have a coarseness below 20 mg/100metres and most preferably have a coarseness below 18 mg/100 metres.

The first fiber is preferably selected from substantially unrefined, short, low-coarseness fibers. As used in the present invention, low-coarseness is preferably below 12 mg/100 metres. A complete discussion of coarseness can be found for example in Kajaani Electronics Ltd., *The Significance of Coarseness in Papermaking*, Kajaani Finland, 1986. These low-coarseness fibers are preferably selected from eucalyptus fibers or other hardwoods; mixtures of eucalyptus fibers and other hardwood fibers; mixtures of hardwood fibers or eucalyptus fibers with other low-coarseness fibers, more preferably with a lower coarseness than that of eucalyptus fiber; and mixtures of the foregoing. Preferred fibers for use as the first fiber are eucalyptus fiber and northern hardwood kraft fiber. Other low-coarseness fibers which may be used in combination with eucalyptus fibers include non-woody plant fibers such as those disclosed in US-A-5,320,710 and 3,620,911.

Preferred first fiber is selected from northern hardwood fibers which have been dried and eucalyptus fiber.

The second fiber is preferably selected from substantially unrefined, long, high-strength fibers. As used in the present invention long fibers are those having an average fiber length of at least 2.0 mm. Strength is usually expressed as the length at which a strip of paper will break under its own weight. Papers made with high-strength fibers typically have a breaking length of at least 12 km, more preferably at least 14 km. These fibers are preferably selected from softwood kraft fibers, preferably northern softwood kraft fibers; mixtures containing as a major portion northern softwood kraft fibers; low-coarseness softwood kraft fibers having a comparable or lower coarseness than that of northern softwood kraft fibers which is typically between 14 and 20 mg/100 meters; and mixtures of the foregoing.

A product produced by the method of the invention can be prepared as a stratified or non-stratified product. In one embodiment, the product is prepared as a non-stratified product, however, exhibiting the characteristics of high softness and bulk. A stratified product may be produced by the present invention, but if a stratified product is produced, the amount of hardwood kraft fiber may be reduced.

The pulp is mixed with strength-adjusting agents such as starches, debonders, and mixtures thereof. The pulp contains up to about 5 lbs/ton (2.5 kg/tonne) of one or more strength adjusting agents 303161.0, preferably 2 to 3 lbs (1 to 1.5 kg). The strength adjusting agents are preferably selected from Solvitose N Starch®; Reilly-Whiteman DR-170® debonder; Westcat PG; Redibond; and Quasoft 202 JR®, 218®, and 206® Varisoft 475® from Quaker Chemicals.

In many cases, particularly when a stratified machine is used, starches and debonders can be advantageously used simultaneously. In other cases starches, debonders or mixtures thereof may be supplied to the wet end while debonders may be applied by spraying.

Suitable debonders, however, will be readily apparent to the skilled artisan. Suitable debonders are widely described in the patent literature. A comprehensive but non-exhaustive list includes US-A-4,795,530; 5,225,047; 5,399,241; 3,844,880; 3,554,863; 3,554,862; 4,795,530; 4,720,383; 5,223,096; 5,262,007; 5,312,522; 5,354,425 and EP-A-0 675 225.

The web may further include temporary strength agents. Typical temporary strength adjusting agents are well known to the skilled artisan and the method and amounts for their effective use are also understood by the skilled artisan. Typical temporary wet strength agents which may be used in the present invention include, but are not limited to glyoxal and modified starches.

The amount of strength adjusting agent is preferably provided to control the machine direction (MD) strength of the multiple-ply web to from about 32 to about 38 g/3" (76 mm) strip/lb. (0.45 kg) basis weight after embossing. The strength-control agent is added in an amount up to about 5 lbs/ton (2.5 kg/tonne), preferably less than 4 lbs/ton (2 kg/tonne), more preferably between 3 and 4 lbs/ton (1.5 and 2 kg/tonne).

The MD tensile strength (g/3" (76 mm) weight per lb. (0.45 kg) basis weight) is from about 27 to about 38, preferably about 30 to 35. The CD tensile strength (g/3" (76 mm) width per lb. (0.45 kg) basis weight) is preferably from about 10 to about 16, more preferably from about 12 to about 14. Throughout this application, by basis weight, we mean basis weight in pounds (0.45 kg) per 3000 square ft. (280 sq.metre) ream of the web. Many of the values provided throughout the specification have been normalized.

A first nascent web is then formed from the pulp. The web can be formed using any of the standard wet-press configurations known to the skilled artisan, e.g., crescent former, suction breast roll, twin-wire former, etc. Once the web is formed, it has a basis weight, under TAPPI LAB CONDITIONS of at least about 11 lbs/3000 sq. ft. (5 kg/280 sq.metre) ream, preferably at least about 13.5 lbs/3000 sq. ft. (6 kg/280 sq/metre) ream, more preferably at least about 12-14 lbs/3000 sq. ft. (5.5-6.5 kg/280 sq.metre) ream. TAIPEI LAB-CONDITIONS refers to TAPPI T-402 test methods specifying time, temperature and humidity conditions for a sequence of conditioning steps.

After the web is formed, it can be sprayed with from at least 1.0 to about 3.5 lbs/ton (0.5 to about 1.75 kg/tonne) of softener, more preferably about 1.5 to about 3.5 lbs/ton (0.75 to about 1.75 kg/tonne) of softener, in accordance with the method of claim 21. Alternatively, in accordance with the method of claim 1, a softener may be incorporated into the wet end of the process to result in a web including at least about 1.0 lbs/ton (0.5 kg/tonne) of softener. It will be understood by the skilled artisan that spraying of the softener may occur after two webs have been joined to form a two-ply product.

The softener is a cationic nitrogenous softener. The softener is preferably selected from trivalent and tetravalent cationic organic nitrogen compounds incorporating long fatty acid chains; compounds including imidazolines, amino acid salts, linear amine amides; tetravalent or quaternary ammonium salts; mixtures of the foregoing. More particularly, the softener may be Quasoft 202 JR®, 218®, 209® and 219®, and Varisoft 475® from Quaker Chemical.

The web is then dewatered preferably by an overall compaction process. The web is then adhered to a Yankee dryer. Any suitable art recognized adhesive may be used on the Yankee dryer. Preferred adhesives include Houghton 8290 (H8290) adhesive, Houghton 82176 (H82176) adhesive, Quacoat A-252 (QA252), Betz creplus 97 (Betz+97), Calgon 675 B. Suitable adhesives are widely described in the patent literature. A comprehensive but non-exhaustive list includes US-A-5,246,544; 4,304,625; 4,064,213; 4,501,640; 4,528,316; 4,883,564; 4,684,439; 4,886,579; 5,374,334; 5,382,323; 4,094,718; and 5,281,307. Typical release agent can be used in accordance with the present invention; however, the amount of release, should one be used at all, will often be below traditional levels.

The web is then creped from the Yankee dryer and calendered. The adhesion between the web and the Yankee dryer is controlled to such a level that a reel crepe of at least about 20%, more preferably 24% and most preferably 25% is maintained. Creping is preferably carried out at a creping angle of from about 70° to about 88°, preferably about 73° to about 85° and more preferably about 80°. The crepe blade bevel angle is preferably about 0° to about 15 °, more preferably about 10°.

The product produced by the method of the present invention includes a soft bulky tissue which can be made on a non-stratified machine. The skilled artisan would understand that a stratified product can be formed using lower proportions of hardwood kraft than on a non-stratified product. The product produced by the method of the present invention is a multi-ply product. Two or more plies of tissue are adhered to one another preferably by embossing and perforating the two plies together. The embossments and perforations usually account for adhesion. The two plies may be adhered using an adhesive either alone or in conjunction with an embossing pattern. Suitable adhesives are well known and will be readily apparent to the skilled artisan. The two plies are preferably embossed together with adhesive being applied only to the tips of the emboss elements. The multi-ply product includes a two-ply product in which a second ply is formed in the same manner as the first ply.

The calendering and embossing of the webs preferably combines to form a multi-ply web having a specific caliper of the multi-ply web of at least about 0.17 mm/kg (3.0 mils/lb) basis weight, more preferably from about 0.17 to 0.24 mm/kg (3.0 to about 4.2 mils/lb) basis weight and most preferably 0.18 to 0.21 mm/kg (3.2 to 3.8 mils/lb) basis weight. The GM MMD of the multiply web is less than about 0.190, is more preferably less than about 0.180, and is most preferably about 0.150 to about 0.175. The tensile stiffness of the web is less than 0.72 g/% strain per pound (0.45 kg) of basis weight and more preferably at or less than about 0.58 g/% strain per pound (0.45 kg) of basis weight, most preferably less than about 0.51 g/% strain per pound (0.45 kg) of basis weight.

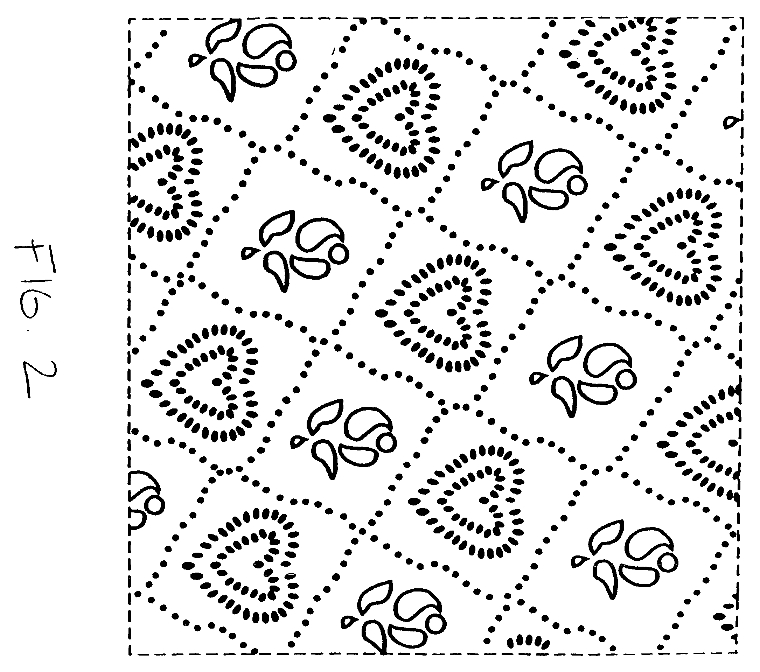

The web may be embossed with any art-recognized embossing pattern. One preferred emboss pattern is made up of a wavy pattern, e.g. lattice of dot shaped bosses having either hearts, flowers or both within the separation areas of the pattern. Figure 2 is a depiction of a preferred emboss pattern for use with the present invention. It is also preferred that the emboss pattern of the present invention be formed of crenulated emboss elements. A crenulated emboss element is one that has a wide base with smaller separated land areas at the apex, resembling for example the top of a castle wall. Such an emboss pattern further enhances the tissue bulk and softness. The emboss element heights are preferably less than 90 thousandths of an inch (2.3 mm), more preferably less than 70 thousandths of an inch (1.8 mm) and most preferably 50 to 70 thousandths of an inch (1.3 to 1.8 mm).

The following examples are not to be construed as limiting the invention as described herein.

### Example 1

A nascent web was formed from a combination of 65% eucalyptus fibres and 35% northern softwood kraft fibres. The pulp used to form the web also contained 1.0 lbs/ton (0.5 kg/tonne) of Quasoft 218 as a strength-adjusting agent. The web was sprayed with 1.8 lbs/ton (0.9 kg/tonne) of Quasoft 218 as a softener. The treated web was then dewatered by overall compaction and adhered to the Yankee dryer. Houghton 82176 and 564 were used as the Yankee dryer adhesive and release. The web was creped from the Yankee dryer and calendered. The reel speed was 3481 feet (1061 m) per minute. A reel crepe of 24.3% was maintained during creping.

A second web was formed in the same manner and combined with the first web by embossing a heart/flower/lattice pattern as depicted in Figure 2. The resultant multiply sheet had the following properties:

A roll of 170 sheets was formed from the multi-layer product described above. The 170-sheet-count roll has the following characteristics per lb (0.45 kg) of basis weight:
33.7 MD strength g/3" (76 mm)
13.0 CD strength g/3" (76 mm)
26.6 basis weight 3000 sq. ft. (280 sq. metre)
3.87 specific caliper mils/8 sheets (0.098 mm/8 sheets)
0.159 GM MMD
0.50 tensile stiffness g/% strain

The product attributes differ slightly when a 340 sheet count product is formed. These differences are generally due to a decrease in the amount of embossing that is used, since the need for added bulk is reduced in a 340-sheet-count product. The caliper of a typical 340 sheet count product was about 0.081 mm/8 sheet count (3.2 mils/8 sheet count) per lb (0.45 kg) of basis weight while the specific tensile stiffness was about 0.68 and the GM MMD was about 0.170.

### Examples 2-16

Examples 2-16 were carried out in the same manner as Example 1, with the processing conditions and product attributes as set forth in the Table below.

**Table 1**

| Example No. | Pulp Type and Amount | Homo or Stratified | Percent Crepe | Yankee Adhesive | Softoner and Amount | Strength Adjust and Amt | Crepe Angle | Blade Bevel | Basis Weight |
|---|---|---|---|---|---|---|---|---|---|
| 1 | 65 Euc/35 SWK | H | 24.3 | H82176 | Q218 1.8 lbs/on* | Q218 1.0 lb/ton* | 75 | 15 | 26.6 |
| 2 | 50 EUC/ 50 SWK | H | 25.0 | H82176 | Q218 2.5 lbs/ton* | Q206 2-3 lb/ton* | 78 | 12 | 26.5 |
| 3 | 65 Euc/ 35 SWK | H | 25.0 | H82176 | Q218 2.5 lbs/ton* | Q206 2-3 lb/ton* | 78 | 12 | 26.4 |
| 4 | 65 Euc/ 35 SWK | H | 25.0 | H82176 | Q218 2.5lbs/ton* | Q206 2-3 lb/ton* | 78 | 12 | 26.5 |
| 5 | 65 Euc/ 35 SWK | H | 20.6 | Betz+97 | Q218 2 lbs/ton* | -- | 73 | 17 | 27.0 |
| 6 | 65 Euc/ 35 SWK | H | 22.0 | Betz+97 | Q218 2 lbs/ton* | -- | 73 | 17 | 26.4 |
| 7 | 65 Euc/ 35 SWK | H | 23.0 | Betz+97 | Q218 2.5 lbs/ton* | -- | 73 | 17 | 27.8 |
| 8 | 35 Euc/ 65 SWK | S | 25.0 | H8290 | Q202JR 3.5 lbs/ton* | Q202JR 7.0 lb/ton* | 82 | 18 | 23.7 |
| 9 | 69 HWK/ 31 SWK | H | 25.1 | H82176 | Q218 2.2 lbs/ton* | Q206 1.5 lb/ton* | 80 | 15 | 26.1 |
| 10 | 70 Euc/ 30 SWK | H | 25.0 | H82176 | Q218 2.5 lbs/ton* | Q206 1.0 lb/ton* | 80 | 15 | 26.1 |
| 11 | 68 Euc/ 32 SWK | H | 25.0 | H82176 | Q218 2.4lbs/ton* | Q206 1.0 lb/ton* | 80 | 15 | 25.6 |
| 12 | 65 Euc/ 35 SWK | H | 25.0 | QA252 | Q218 1.5 lbs/ton* | westcatPG 2.5 lb/ton* | 75 | 15 | 26.3 |
| 13 | 60 Euc/40 Hemlock | H | 25.0 | QA252 | Q218 1.5 lbs/ton* | westcatPG 5.5 lb/ton* | 75 | 15 | 26.8 |
| 14 | 60 Euc/ 40 Hemlock | H | 25.0 | QA252 | Q218 1. 5 lbs/ton* | westcatPG 3.5 lb/ton* | 75 | 15 | 26.8 |
| 15 | 65Euc/35SWK | S | 24.3 | H82176 | Q218 4 lbs/ton* | Q218 1.0 lb/ton* | 75 | 15 | 26.0 |
| 16 | 80 Euc/20 SWK | -- | -- | -- | -- | -- | -- | -- | 27.1 |

| | | | | | | | | | |
|---|---|---|---|---|---|---|---|---|---|
| * 1lbs/ton = 1/2 kg/tonne | | | | | | | | | |

**Table I (con't)**

| Example No. | Blade Bevel | Caliper mils/lb* | MD Tensile per lb* | CD Tensile per lb * | MD Stretch | Perf. Tensile | GM MMD Friction | Tensile Stiffness per lb. |
|---|---|---|---|---|---|---|---|---|
| 1 | 0 | 3.9 | 34 | 13 | 22.2 | 344 | 0 159 | 0.50* |
| 2 | 0 | 3.6 | 32 | 11 | 20.0 | 325 | 0.158 | 0.56* |
| 3 | 0 | 3.7 | 30 | 12 | 19.2 | 334 | 0.166 | 0.54* |
| 4 | 0 | 3.3 | 28 | 11 | 20.4 | 370 | 0.155 | 0.58* |
| 5 | 0 | 3.8 | 36 | 13 | 19.7 | 365 | 0.176 | 0.57* |
| 6 | 0 | 3.8 | 34 | 12 | 16.8 | 315 | 0.170 | 0.52* |
| 7 | 0 | 3.6 | 33 | 14 | 18.9 | 359 | 0.165 | 0.60* |
| 8 | 10 | 3.6 | 34 | 23 | 24.0 | 315 | 0.144 | 0.72* |
| 9 | 5 | 3.7 | 30 | 12 | 19.3 | 350 | 0.178 | 0.43* |
| 10 | 5 | 3.6 | 38 | 14 | - | 362 | 0.174 | 0.50* |
| 11 | 5 | 3.7 | 29 | 11 | 21.4 | 304 | 0.170 | 0.41* |
| 12 | 0 | 3.7 | 33 | 13 | 19.3 | 323 | 0.169 | 0.52* |
| 13 | 0 | 3.6 | 33 | 15 | 19.5 | 388 | 0.179 | 0.58* |
| 14 | 0 | 3.6 | 33 | 15 | 18.8 | 358 | 0.172 | 0.57* |
| 15 | 0 | 3.8 | 34 | 15 | 18.8 | 358 | 0.172 | 0.57* |
| 16 | - | 3.9 | 30 | 14 | - | 383 | 0.174 | 0.51* |

| | | | | | | | | |
|---|---|---|---|---|---|---|---|---|
| * 1lb = 0.45 kg, 1 mil/lb = 0.056 mm/kg | | | | | | | | |

## Claims

1. A method of making an ultra-soft high basis weight multi-ply tissue having at least two paper webs formed by wet pressing comprising:
(a) forming at least one web (W) by:
(a1) providing a first fibrous pulp including 35 to 90% of a short fiber, wherein said short fiber has an average fiber length of 2.0 mm or less and a coarseness of 12 mg/100 metres or less; and including 10 to 65% of a long fiber having an average fiber length greater than 2.0 mm and a coarseness of less than 35 mg/100 metres wherein said pulp further includes chemicals consisting of up to 5 lb/ton (2.5 kg/tonne) of one or more strength adjusting agents and optionally temporary wet strength adjusting agents;
(a2) forming a first nascent web from a liquid slurry of said first pulp, wherein said first web has a basis weight of at least 11 lbs/3000 sq. ft. (5 kg/280 sq. metres) ream;
(a3) including in said first web at least 1.0 lbs/ton (0.5 kg/tonne) of cationic nitrogenous softener;
(a4) dewatering said first web through wet pressing;
(a5) adhering said first web to a Yankee dryer (26);
(a6) creping said first web from said Yankee dryer, wherein the adhesion between said first web and said Yankee dryer is controlled to achieve a reel crepe of at least 20%;
(b) forming at least one further web (W) by:
(b1) providing a second fibrous pulp including 35 to 90% of a short fiber, wherein said first fiber has an average fiber length of 2.0 mm or less and a coarseness of 12 mg/100 metres or less; and including 10 to 65% of a long fiber having an average fiber length greater than 2.0 mm and a coarseness of less than 35 mg/100 metres wherein said pulp further includes chemicals consisting of up to 5 lb/ton (2.5 kg/tonne) of one or more strength adjusting agents and optionally temporary wet strength adjusting agents;
(b2) forming a second nascent web from a liquid slurry of said second pulp, wherein said second web has a basis weight of at least 11 lbs/3000 sq. ft. (5 kg/280 sq. metres) ream;
(b3) including in said second web at least 1.0 lbs/ton (0.5 kg/tonne) of cationic nitrogenous softener;
(b4) dewatering said second web through wet pressing;
(b5) adhering said second web to a Yankee dryer (26);
(b6) creping said second web from said Yankee dryer, wherein the adhesion between said second web and said Yankee dryer is controlled to achieve a reel crepe of at least 20%;
(c) combining said webs to form a multi-ply web;
(d) calendering said webs either individually prior to combination into a multi-ply web or together as a multi-ply web; and
wherein steps (a), (b) and (d) are controlled to result in a multi-ply tissue product having a tensile strength of 27 to 38 g/3" (76 mm) width per lb (0.45kg) of basis weight, a CD tensile strength of 10 to 23 g/3" (76 mm) width per lb (0.45 kg) of basis weight, a caliper of at least 0.17mm/kg (3 mils/lb) basis weight, a GM MMD friction of less than 0.190, and a tensile stiffness of less than 0.72 g/% strain per lb. (0.45kg) of basis weight.

2. A method as claimed in claim 1 wherein steps (a) and (b) are carried out in the same manner so that the webs have the same structure, properties and composition.

3. A method according to claim 1, wherein said long fibers have a coarseness of less than 20 mg/100 metres.

4. A method according to claim 1, wherein said short fiber in (a1) or (b1) is selected from eucalyptus fibers or other hardwood fibers; mixtures of eucalyptus fibers and North American hardwood fibers; mixtures of hardwood fibers or eucalyptus fibers with other low-coarseness fibers, and mixtures of the foregoing.

5. A method according to claim 1, wherein said long fiber in (a1) or (b1) is selected from softwood kraft fibers, northern softwood kraft fibers, mixtures containing as a major portion northern softwood kraft fibers, low-coarseness softwood kraft fibers having lower coarseness than that of northern softwood kraft fibers, and mixtures of the foregoing.

6. A method according to claim 1, wherein the cationic nitrogenous softener is included by spraying said softener onto said web.

7. A method according to claim 1, wherein the cationic nitrogenous softener is selected from the group consisting of trivalent and tetravalent organic nitrogen compounds incorporating long chain fatty acids; imidazolines; amino acid salts, linear amine amides; quaternary ammonium salts and mixtures thereof.

8. A method according to claim 1, wherein the basis weight of said web is at least 13.0 lbs/3000 sq. ft. (5.9 kg/280 sq. metres) ream.

9. A method according to claim 1, wherein said strength adjusting agent is a starch, debonder or a mixture thereof selected from the group consisting of Solvitose N Starch®; Reilly-Whiteman DB-170® debonder; Westcat PG; Redibond; Quasoft 202 JR®, 218®, and 206® and Varisoft 475®.

10. A method according to claim 1, wherein said strength adjusting agent is added in an amount effective to control the MD tensile strength of said multi-ply web of from 30 to 35 g/3" (76 mm) width per pound (0.45 kg) basis weight.

11. A method according to claim 1, wherein said multi-ply web has a CD tensile strength from of from 12 to 14 g/3" (76 mm) width/lb (0.45 kg) basis weight.

12. A method according to claim 1, wherein said multi-ply web has a specific caliper of at least 0.18mm/kg (3.2 mils/lb) basis weight.

13. A method according to claim 1, wherein said multi-ply web has a GM MMD of not more than 0.175.

14. A method according to claim 1, wherein said multi-ply web has a tensile stiffness of not more that 0.58.

15. A method according to claim 13, wherein tensile stiffness is less than 0.51.

16. A method according to claim 1, wherein each of the said webs is calendered individually.

17. A method according to claim 1, wherein said multi-ply web is calendered.

18. A method according to claim 1, wherein said webs further include the temporary wet strength agent.

19. A method according to claim 1, wherein said combined webs are embossed with a way pattern of dot shaped bosses having hearts, flowers, or both within the separation areas of the pattern.

20. A method according to claim 1, wherein said combined webs are embossed with crenulated emboss elements.

21. A method of making an ultra-soft high basis weight multi-ply tissue having at least two paper webs formed by wet pressing comprising:
(a) forming at least one web (W) by:
(a1) providing a first fibrous pulp including 35 to 90% of a short fiber, wherein said short fiber has an average fiber length of 2.0 mm or less and a coarseness of 12 mg/100 metres or less; and including 10 to 65% of a long fiber having an average fiber length greater than 2.0 mm and a coarseness of less than 35 mg/100 metres wherein said pulp further includes chemicals consisting of up to 5 lb/ton (2.5 kg/tonne) of one or more strength adjusting agents and optionally temporary wet strength adjusting agents;
(a2) forming a first nascent web from a liquid slurry of said first pulp, wherein said first web has a basis weight of at least about 11 lbs/3000 sq. ft. (5 kg/280 sq. metres) ream;
(a3) dewatering said first web through wet pressing;
(a4) adhering said first web to a Yankee dryer (26);
(a5) creping said first web from said Yankee dryer, wherein the adhesion between said first web and said Yankee dryer is controlled to achieve a reel crepe of at least 20%;
(b) forming at least one further web (W) by:
(b1) providing a second fibrous pulp including 35 to 90% of a short fiber, wherein said first fiber has an average fiber length of 2.0 mm or less and a coarseness of 12 mg/100 metres or less; and including 10 to 65% of a long fiber having an average fiber length greater than 2.0 mm and a coarseness of less than 35 mg/100 metres wherein said pulp further includes chemicals consisting of up to 5 lb/ton (2.5 kg/tonne) of one or more strength adjusting agents and optionally temporary wet strength adjusting agents;
(b2) forming a second nascent web from a liquid slurry of said second pulp, wherein said second web has a basis weight of at least 11 lbs/3000 sq. ft. (5 kg/280 sq. metres) ream;
(b3) dewatering said second web through wet pressing;
(b4) adhering said second web to a Yankee dryer (26);
(b5) creping said second web from said Yankee dryer, wherein the adhesion between said second web and said Yankee dryer is controlled to achieve a reel crepe of at least 20%;
(c) combining said webs to form a multi-ply web;
(d) calendering said webs either individually prior to combination into a multi-ply web or together as a multi-ply web;
(e) wherein said multi-ply web is sprayed with a softener to result in a web containing at least 1.0 lbs/ton (0.5 kg/tonne) of cationic nitrogenous softener; and
wherein steps (a), (b) and (d) are controlled to result in a multi-ply tissue product having a tensile strength of 27 to 38 g/3" (76 mm) width per lb (0.45kg) of basis weight, a CD tensile strength of 10 to 23 g/3" (76 mm) width per lb (0.45 kg) of basis weight, a caliper of at least 0.17mm/kg (3 mils/lb) basis weight, a GM MMD friction of less than 0.190, and a tensile stiffness of less than 0.72 g/% strain per lb. (0.45kg) of basis weight.

## Patentansprüche

1. Verfahren zum Herstellen eines ultraweichen mehrlagigen Tissuepapiers mit hohem Grundgewicht, das zumindest zwei durch Naßpressen erzeugte Papierbahnen enthält, mit den Schritten:
(a) Erzeugen zumindest einer Papierbahn (W) durch:
(a1) Bereitstellen einer ersten Fasermasse, die 35 bis 90% einer Kurzfaser enthält, wobei die Kurzfaser eine mittlere Faserlänge von 2,0 mm oder darunter und eine Rauhigkeit von 12 mg/100 Meter oder darunter hat; und die 10 bis 65 % einer Langfaser mit einer mittleren Faserlänge über 2,0 mm und einer Rauhigkeit von unter 35 mg/100 Meter enthält, wobei die Masse ferner Chemikalien enthält, die aus bis zu 5 Pfund/Tonne (2,5 kg/Tonne) eines Mittels oder mehrerer Mittel zum Einstellen der Festigkeit und optional Mitteln zum Einstellen der temporären Naßfestigkeit bestehen;
(a2) Erzeugen einer ersten naszierenden Papierbahn aus einem flüssigen Brei der ersten Masse, wobei die erste Papierbahn ein Grundgewicht von mindestens 11 Pfund/3000 (Fuß)² (5 kg/280 m²) Ries hat;
(a3) Einschließen von zumindest 1,0 Pfund/Tonne (0,5 kg/Tonne) kationischen stickstoffhaltigen Weichmachers in die erste Papierbahn;
(a4) Entwässern der ersten Papierbahn durch Naßpressen;
(a5) Anheften der ersten Papierbahn an einen Yankee-Trockner (26);
(a6) Kreppen der ersten Papierbahn von dem Yankee-Trockner, wobei die Haftung zwischen der ersten Papierbahn und dem Yankee-Trockner so gesteuert wird, daß ein Rollenkrepp von zumindest 20% erzeugt wird;
(b) Erzeugen zumindest einer weiteren Papierbahn (W) durch:
(b1) Bereitstellen einer zweiten Fasermasse, die 35 bis 90% einer Kurzfaser enthält, wobei die erste Faser eine mittlere Faserlänge von 2,0 mm oder darunter und eine Rauhigkeit von 12 mg/100 Meter oder darunter hat; und die 10 bis 65 % einer Langfaser mit einer mittleren Faserlänge über 2,0 mm und einer Rauhigkeit von unter 35 mg/100 Meter enthält, wobei die Masse ferner Chemikalien enthält, die aus bis zu 5 Pfund/Tonne (2,5 kg/Tonne) eines Mittels oder mehrerer Mittel zum Einstellen der Festigkeit und optional Mitteln zum Einstellen der temporären Naßfestigkeit bestehen;
(b2) Erzeugen einer zweiten naszierenden Papierbahn aus einem flüssigen Brei der zweiten Masse, wobei die zweite Papierbahn ein Grundgewicht von mindestens 11 Pfund/3000 (Fuß)² (5 kg/280 m²) Ries hat;
(b3) Einschließen von zumindest 1,0 Pfund/Tonne (0,5 kg/Tonne) kationischen stickstoffhaltigen Weichmachers in die zweite Papierbahn;
(b4) Entwässern der zweiten Papierbahn durch Naßpressen;
(b5) Anheften der zweiten Papierbahn an einen Yankee-Trockner (26);
(b6) Kreppen der zweiten Papierbahn von dem Yankee-Trockner, wobei die Haftung zwischen der zweiten Papierbahn und dem Yankee-Trockner so gesteuert wird, daß ein Rollenkrepp von zumindest 20% erzeugt wird;
(c) Zusammenfügen der Papierbahnen zu einer mehrlagigen Papierbahn;
(d) Kalandrieren der Papierbahnen, entweder einzeln vor dem Zusammenfügen zu einer mehrlagigen Papierbahn oder gemeinsam als mehrlagige Papierbahn; und
wobei die Schritte (a), (b) und (d) so gesteuert werden, daß sie ein mehrlagiges Tissueprodukt ergeben, mit einer Reißfestigkeit von 27 bis 38 g/3 Zoll (76 mm) Breite pro Pfund (0,45 kg) Grundgewicht, einer Reißfestigkeit in Querrichtung von 10 bis 23 g/3 Zoll (76 mm) Breite pro Pfund (0,45 kg) Grundgewicht, einer Dicke von zumindest 0,17 mm/kg (3 Mil/Pfund) Grundgewicht, einer GM MMD-Reibung unter 0,190 und einer Zugsteifigkeit von weniger als 0,72 g/% Dehnung pro Pfund (0,45 kg) Grundgewicht.

2. Verfahren nach Anspruch 1, wobei die Schritte (a) und (b) auf gleiche Art und Weise ausgeführt werden, so daß die Papierbahnen gleiche Struktur, Eigenschaften und Zusammensetzung haben.

3. Verfahren nach Anspruch 1, wobei die Langfasern eine Rauhigkeit von weniger als 20 mg/100 Meter haben.

4. Verfahren nach Anspruch 1, wobei die Kurzfaser in (a1) oder (b1) gewählt ist aus: Eukalyptusfasern oder anderen Hartholzfasern; Mischungen von Eukalyptusfasern und Fasern von nordamerikanischen Harthölzern; Mischungen von Hartholzfasern oder Eukalyptusfasern mit anderen Fasern geringer Rauhigkeit sowie Mischungen daraus.

5. Verfahren nach Anspruch 1, wobei die Langfaser in (a1) oder (b) gewählt ist aus: Weichholz-Kraftfasern, Kraftfasern von nordischen Weichhölzern, Mischungen, die als Hauptbestandteil Kraftfasern von nordischen Weichhölzern enthalten, Weichholz-Kraftfasern geringer Rauhigkeit, deren Rauhigkeit geringer ist als die von Kraftfasern nördlicher Weichhölzer, sowie Mischungen daraus.

6. Verfahren nach Anspruch 1, wobei der kationische stickstoffhaltige Weichmacher durch Sprühen des Weichmachers auf die Papierbahn eingeschlossen wird.

7. Verfahren nach Anspruch 1, wobei der kationische stickstoffhaltige Weichmacher aus der Gruppe bestehend aus dreiwertigen und vierwertigen organischen Stickstoffverbindungen, die höhere Fettsäuren einlagern, Imidazolinen, Aminosäuresalzen, linearen Aminamiden, quartären Ammoniumsalzen und Mischungen daraus gewählt ist.

8. Verfahren nach Anspruch 1, wobei das Grundgewicht der Papierbahn zumindest 13,0 Pfund/3000 (Fuß)² (5,9 kg/280 m²) Ries ist.

9. Verfahren nach Anspruch 1, wobei das Mittel zum Einstellen der Festigkeit eine Stärke, ein bindungslösendes Mittel oder eine Mischung daraus ist, ausgewählt aus der Gruppe bestehend aus Solvitose N Starch®, Reilly-Whiteman DB-170® Debonder; Westcat PG; Redibond; Quasoft 202 JR®, 218® und 206® sowie Varisoft 475®.

10. Verfahren nach Anspruch 1, wobei das Mittel zum Einstellen der Festigkeit in einer Menge zugegeben wird, die ausreicht, um die Reißfestigkeit in Längsrichtung der mehrlagigen Papierbahn von 30 bis 35 g/3 Zoll (76 mm) Breite pro Pfund (0,45 kg) Grundgewicht zu steuern.

11. Verfahren nach Anspruch 1, wobei die mehrlagige Papierbahn eine Reißfestigkeit in Querrichtung von 12 bis 14 g/3 Zoll (76 mm) Breite pro Pfund (0,45 kg) Grundgewicht hat.

12. Verfahren nach Anspruch 1, wobei die mehrlagige Papierbahn eine spezifische Dicke von mindestens 0,18 mm/kg (3,2 Mil/Pfund) Grundgewicht hat.

13. Verfahren nach Anspruch 1, wobei die mehrlagige Papierbahn einen GM MMD von nicht mehr als 0,175 hat.

14. Verfahren nach Anspruch, wobei die mehrlagige Papierbahn eine Zugsteifigkeit von nicht mehr als 0,58 hat.

15. Verfahren nach Anspruch 13, wobei die Zugsteifigkeit unter 0,51 liegt.

16. Verfahren nach Anspruch 1, wobei jede der Papierbahnen einzeln kalandriert wird.

17. Verfahren nach Anspruch 1, wobei die mehrlagige Papierbahn kalandriert wird.

18. Verfahren nach Anspruch 1, wobei die Papierbahnen ferner das Mittel für temporäre Naßfestigkeit enthalten.

19. Verfahren nach Anspruch 1, wobei die zusammengefügten Papierbahnen mit einem welligen Muster aus punktförmigen Buckeln geprägt werden, wobei Herzen, Blumen oder beides in den Trennflächen des Musters vorhanden sind.

20. Verfahren nach Anspruch 1, wobei die zusammengefügten Papierbahnen mit krenulierten Prägeelementen geprägt werden.

21. Verfahren zum Herstellen eines ultraweichen mehrlagigen Tissuepapiers mit hohem Grundgewicht, das zumindest zwei durch Naßpressen erzeugte Papierbahnen enthält, mit den Schritten:
(a) Erzeugen zumindest einer Papierbahn (W) durch:
(a1) Bereitstellen einer ersten Fasermasse, die 35 bis 90% einer Kurzfaser enthält, wobei die Kurzfaser eine mittlere Faserlänge von 2,0 mm oder darunter und eine Rauhigkeit von 12 mg/100 Meter oder darunter hat; und die 10 bis 65 % einer Langfaser mit einer mittleren Faserlänge über 2,0 mm und einer Rauhigkeit von unter 35 mg/100 Meter enthält, wobei die Masse ferner Chemikalien enthält, die aus bis zu 5 Pfund/Tonne (2,5 kg/Tonne) eines Mittels oder mehrerer Mittel zum Einstellen der Festigkeit und optional Mitteln zum Einstellen der temporären Naßfestigkeit bestehen;
(a2) Erzeugen einer ersten naszierenden Papierbahn aus einem flüssigen Brei der ersten Masse, wobei die erste Papierbahn ein Grundgewicht von mindestens 11 Pfund/3000 (Fuß)² (5 kg/280 m²) Ries hat;
(a3) Entwässern der ersten Papierbahn durch Naßpressen;
(a4) Anheften der ersten Papierbahn an einen Yankee-Trockner (26);
(a5) Kreppen der ersten Papierbahn von dem Yankee-Trockner, wobei die Haftung zwischen der ersten Papierbahn und dem Yankee-Trockner so gesteuert wird, daß ein Rollenkrepp von zumindest 20% erzeugt wird;
(b) Erzeugen zumindest einer weiteren Papierbahn (W) durch:
(b1) Bereitstellen einer ersten Fasermasse, die 35 bis 90% einer Kurzfaser enthält, wobei die erste Faser eine mittlere Faserlänge von 2,0 mm oder darunter und eine Rauhigkeit von 12 mg/100 Meter oder darunter hat; und die 10 bis 65 % einer Langfaser mit einer mittleren Faserlänge über 2,0 mm und einer Rauhigkeit von unter 35 mg/100 Meter enthält, wobei die Masse ferner Chemikalien enthält, die aus bis zu 5 Pfund/Tonne (2,5 kg/Tonne) eines Mittels oder mehrerer Mittel zum Einstellen der Festigkeit und optional Mitteln zum Einstellen der temporären Naßfestigkeit bestehen;
(b2) Erzeugen einer zweiten naszierenden Papierbahn aus einem flüssigen Brei der zweiten Masse, wobei die erste Papierbahn ein Grundgewicht von mindestens 11 Pfund/3000 (Fuß)² (5 kg/280 m²) Ries hat;
(a3) Entwässern der zweiten Papierbahn durch Naßpressen;
(a4) Anheften der zweiten Papierbahn an einen Yankee-Trockner (26);
(a5) Kreppen der zweiten Papierbahn von dem Yankee-Trockner, wobei die Haftung zwischen der zweiten Papierbahn und dem Yankee-Trockner so gesteuert wird, daß ein Rollenkrepp von zumindest 20% erzeugt wird;
(c) Zusammenfügen der Papierbahnen zu einer mehrlagigen Papierbahn;
(d) Kalandrieren der Papierbahnen, entweder einzeln vor dem Zusammenfügen zu einer mehrlagigen Papierbahn oder gemeinsam als mehrlagige Papierbahn;
(e) wobei die mehrlagige Papierbahn mit einem Weichmacher besprüht wird, um eine Papierbahn zu erhalten, die zumindest 1,0 Pfund/Tonne (0,5 kg/Tonne) kationischen stickstoffhaltigen Weichmachers enthält; und wobei die Schritte (a), (b) und (d) so gesteuert werden, daß sie ein mehrlagiges Tissueprodukt ergeben, mit einer Reißfestigkeit von 27 bis 38 g/3 Zoll (76 mm) Breite pro Pfund (0,45 kg) Grundgewicht, einer Reißfestigkeit in Querrichtung von 10 bis 23 g/3 Zoll (76 mm) Breite pro Pfund (0,45 kg) Grundgewicht, einer Dicke von zumindest 0,17 mm/kg (3 Mil/Pfund) Grundgewicht, einer GM MMD-Reibung unter 0,190 und einer Zugsteifigkeit von weniger als 0,72 g/% Dehnung pro Pfund (0,45 kg) Grundgewicht.

## Revendications

1. Procédé de fabrication de papier tissu multicouches ultradoux à grammage élevé ayant au moins deux nappes de papier formées par pressage humide et comprenant :
(a) la formation d'au moins une nappe (W) :
(a1) en fournissant une première pâte fibreuse qui comprend 35 à 90 % de fibre courte, dans laquelle ladite fibre courte possède une longueur moyenne de fibre de 2,0 mm ou moins et une grosseur de 12 mg/100 mètres ou moins ; et en incluant 10 à 65 % de fibre longue ayant une longueur moyenne de fibre supérieure à 2,0 mm et une grosseur inférieure à 35 mg/100 mètres, où ladite pâte inclut en outre des produits chimiques comprenant jusqu'à 2,5 kg/tonne (5 lb/tonne) d'un ou plusieurs agents d'ajustement de la résistance et, de façon optionnelle, des agents d'ajustement temporaire de la résistance du papier à l'état humide ;
(a2) en formant une première nappe naissante à partir d'un mélange liquide de ladite première pâte, dans laquelle ladite première nappe a un grammage d'au moins 5 kg par 280 mètres carrés de rame (11 lb/3000 pieds carrés) ;
(a3) en incluant dans ladite première nappe au moins 0,5 kg/tonne (1,0 lb/tonne) d'un adoucissant azoté cationique ;
(a4) en égouttant ladite première nappe à l'aide d'un pressage humide ;
(a5) en faisant adhérer ladite première nappe à un sécheur "Yankee dryer" (26) ;
(a6) en crêpant ladite première nappe dudit "Yankee dryer", où l'adhésion entre ladite première nappe et ledit "Yankee dryer" est contrôlée pour obtenir un crêpage au rouleau d'au moins 20 % ;
(b) la formation d'au moins une autre nappe (W) :
(b1) en fournissant une seconde pâte fibreuse incluant 35 à 90 % de fibre courte, dans laquelle ladite première fibre a une longueur moyenne de fibre de 2,0 mm ou moins et une grosseur de 12 mg/100 mètres ou moins ; et en incluant 10 à 65 % de fibre longue ayant une longueur moyenne de fibre supérieure à 2,0 mm et une grosseur inférieure à 35 mg/100 mètres, où ladite pâte inclut en outre des produits chimiques comprenant jusqu'à 2,5 kg/tonne (5 lb/tonne) d'un ou plusieurs agents d'ajustement de la résistance et, de façon optionnelle, des agents d'ajustement temporaire de la résistance du papier à l'état humide ;
(b2) en formant une deuxième nappe naissante à partir d'un mélange liquide de ladite deuxième pâte, dans laquelle ladite deuxième nappe a un grammage d'au moins 5 kg par 280 mètres carrés de rame (11 lb/3000 pieds carrés) ;
(b3) en incluant dans ladite seconde nappe au moins 0,5 kg/tonne (1,0 lb/tonne) d'un adoucissant azoté cationique ;
(b4) en égouttant ladite deuxième nappe à l'aide d'un pressage humide ;
(b5) en faisant adhérer ladite seconde nappe à un sécheur "Yankee dryer" (26) ;
(b6) en crêpant ladite seconde nappe dudit "Yankee dryer", où l'adhésion entre ladite seconde nappe et ledit "Yankee dryer" est contrôlée pour obtenir un crêpage au rouleau d'au moins 20 % ;
(c) l'assemblage desdites feuilles pour former une nappe muiticouche ;
(d) le calandrage desdites nappes soit individuellement avant de les assembler en une nappe multicouche, soit ensemble sous forme d'une nappe multicouche ; et
dans lequel les étapes (a), (b) et (d) sont contrôlées pour produire un papier tissu multicouche ayant une résistance à la rupture par traction de 27 à 38 g/76 mm (3") de largeur pour un grammage de 0,45 kg (1 lb), une résistance à la rupture CD de 10 à 23 g/76 mm (3") de largeur pour un grammage de 0,45 kg (1 lb), une épaisseur d'au moins 0,17 mm pour un grammage de 1 kg (3 mils/lb), une friction GM MMD inférieure à 0,190, et une rigidité à la traction inférieure à 0,72 g/% de tension pour un grammage de 0,45 kg (1 lb).

2. Procédé selon la revendication 1, dans lequel les étapes (a) et (b) sont exécutées de la même façon afin que les nappes aient les mêmes structure, propriétés et composition.

3. Procédé selon la revendication 1, dans lequel lesdites fibres longues ont une grosseur inférieure à 20 mg/100 mètres.

4. Procédé selon la revendication 1, dans laquelle ladite fibre courte dans (a1) et (b1) est choisie parmi les fibres d'eucalyptus ou autres fibres de bois de feuillus : les mélanges de fibres d'eucalyptus et de fibres de bois de feuillus d'Amérique du Nord ; les mélanges de fibres de bois de feuillus ou de fibres d'eucalyptus avec d'autres fibres de faible grosseur, et leurs mélanges.

5. Procédé selon la revendication 1, dans lequel ladite fibre longue de (a1) ou de (b1) est choisie parmi les fibres kraft de bois résineux, les fibres kraft de bois résineux du nord, les mélanges contenant une importante quantité de fibres kraft de bois résineux du nord, les fibres kraft de bois résineux de faible grosseur ayant une grosseur inférieure à celle des fibres kraft de bois résineux du nord, et leurs mélanges.

6. Procédé selon la revendication 1, dans lequel l'adoucissant azoté cationique est inclus en pulvérisant ledit adoucisseur sur ladite nappe.

7. Procédé selon la revendication 1, dans lequel l'adoucissant azoté cationique est choisi parmi le groupe constitué des composés azotés organiques trivalents et tétravalents qui incorporent des acides gras à longues chaînes ; des imidazolines ; des sels d'acides aminés, des amine amides linéaires ; des sels d'ammonium quaternaire et de leurs mélanges.

8. Procédé selon la revendication 1, dans lequel le grammage de ladite nappe est d'au moins 5,9 kg par 280 mètres carrés de rame (13,0 lb/3000 pieds carrés).

9. Procédé selon la revendication 1, dans lequel ledit agent d'ajustement de la résistance est un amidon, un agent de décohésion ou un mélange de ceux-ci choisis parmi un groupe constitué de l'amidon Solvitose N® ; l'agent de décohésion Reilly-Whiteman DB-170® ; le Westcat PG ; le Redibond ; les Quasoft 202 JR®, 218® et 206®, ainsi que le Varisoft 475®.

10. Procédé selon la revendication 1, dans lequel ledit agent d'ajustement de résistance est ajouté en une quantité efficace pour contrôler la résistance à la rupture par traction MD de ladite nappe multicouche de 30 à 35 g/76 mm (3") de largeur pour un grammage de 0,45 kg (1 lb).

11. Procédé selon la revendication 1, dans lequel ladite nappe multicouche a une résistance à la rupture CD de 12 à 14 g/76 mm (3") de largeur pour un grammage de 0,45 kg (1 lb).

12. Procédé selon la revendication 1, dans lequel ladite nappe multicouche a une épaisseur spécifique d'au moins 0,18 mm/kg (3,2 mils/lb) de grammage.

13. Procédé selon la revendication 1, dans lequel ladite nappe multicouche a un GM MMD n'excédant pas 0,175.

14. Procédé selon la revendication 1, dans laquelle ladite nappe multicouche a une rigidité à la traction n'excédant pas 0,58.

15. Procédé selon la revendication 1, dans lequel la rigidité à la traction est inférieure à 0,51.

16. Procédé selon la revendication 1, dans lequel chacune desdites nappes est calandrée individuellement.

17. Procédé selon la revendication 1, dans lequel ladite nappe multicouche est calandrée.

18. Procédé selon la revendication 1, dans lequel lesdites nappes comprennent en outre l'agent temporaire pour la résistance du papier à l'état humide.

19. Procédé selon la revendication 1, dans lequel lesdites nappes combinées sont gaufrées avec un motif de bosses à formes pointillées, de coeurs, de fleurs ou des deux, à l'intérieur des zones de séparation du motif.

20. Procédé selon la revendication 1, dans lequel lesdites nappes combinées sont gaufrées avec des éléments de gaufrage crénelés.

21. Procédé de fabrication de papier tissu multicouche ultradoux à grammage élevé composé d'au moins deux nappes formées par pressage humide et comprenant :
(a) la formation d'au moins une nappe (W) :
(a1) en fournissant une première pâte fibreuse comprenant 35 à 90 % de fibre courte, dans laquelle ladite fibre courte possède une longueur moyenne de fibre de 2,0 mm ou moins et une grosseur de 12 mg/100 mètres ou moins ; et en incluant 10 à 65 % de fibre longue ayant une longueur moyenne de fibre supérieure à 2,0 mm et une grosseur inférieure à 35 mg/100 mètres, où ladite pâte inclut en outre des produits chimiques comprenant jusqu'à 2,5 kg/tonne (5 lb/tonne) d'un ou plusieurs agents d'ajustement de la résistance et, de façon optionnelle, des agents d'ajustement temporaire de la résistance du papier à l'état humide ;
(a2) en formant une première nappe naissante à partir d'un mélange liquide de ladite première pâte, dans laquelle ladite première nappe a un grammage d'au moins environ 5 kg par 280 mètres carrés de rame (11 lb/3000 pieds carrés) ;
(a3) en égouttant ladite première nappe à l'aide d'un pressage humide ;
(a4) en faisant adhérer ladite première nappe à un sécheur "Yankee dryer" (26) ;
(a5) en crêpant ladite première nappe dudit "Yankee dryer", où l'adhésion entre ladite première nappe et ledit "Yankee dryer" est contrôlée pour obtenir un crêpage au rouleau d'au moins 20 % ;
(b) la formation d'au moins une autre nappe (W) :
(b1) en fournissant une seconde pâte fibreuse comprenant 35 à 90 % de fibre courte, dans laquelle ladite première fibre a une longueur moyenne de fibre de 2,0 mm ou moins et une grosseur de 12 mg/100 mètres ou moins ; et en incluant 10 à 65 % de fibre longue ayant une longueur moyenne de fibre supérieure à 2,0 mm et une grosseur inférieure à 35 mg/100 mètres, où ladite pâte inclut en outre des produits chimiques comprenant jusqu'à 2,5 kg/tonne (5 lb/tonne) d'un ou plusieurs agents d'ajustement de la résistance et, de façon optionnelle, des agents d'ajustement temporaire de la résistance du papier à l'état humide ;
(b2) en formant une deuxième nappe naissante à partir d'un mélange liquide de ladite seconde pâte, dans lequel ladite seconde nappe a un grammage d'au moins 5 kg par 280 mètres carrés de rame (11 lb/3000 pieds carrés) ;
(b3) en égouttant ladite deuxième nappe à l'aide d'un pressage humide ;
(b4) en faisant adhérer ladite seconde nappe à un sécheur "Yankee dryer" (26) ;
(b5) en crêpant ladite seconde nappe dudit "Yankee dryer", où l'adhésion entre ladite seconde nappe et ledit "Yankee dryer" est contrôlée pour obtenir un crêpage au rouleau d'au moins 20 % ;
(c) l'assemblage desdites nappes pour former une nappe multicouche ;
(d) le calandrage desdites nappes soit individuellement avant de les assembler dans une nappe multicouche, soit ensemble sous la forme d'une nappe multicouche ;
(e) où ladite nappe multicouche est pulvérisée avec un adoucissant pour produire une nappe contenant au moins 0,5 kg/tonne (1,0 lb/tonne) d'un adoucissant azoté cationique ; et où les étapes (a), (b) et (d) sont contrôlées pour produire un papier tissu multicouche ayant une résistance à la rupture de 27 à 28 g/76 mm (3") de largeur pour un grammage de 0,45 kg (1 lb), une résistance à la rupture CD de 10 à 23 g/76 mm (3") pour un grammage de 0,45 kg (1 lb), une épaisseur d'au moins 0,17 mm/kg (3 mils/lb) de grammage, une friction GM MMD inférieure à 0,190, et une rigidité à la traction inférieure à 0,72 % de tension par 0,45 kg (1 lb) de grammage.
